# EUROPÄISCHE PATENTANMELDUNG

(11) **EP 1 983 255 A1**
(43) Veröffentlichungstag der Anmeldung: **22.10.2008**
(21) Anmeldenummer: 07405369.5
(22) Anmeldetag: 27.12.2007
(51) Int. Cl.: F21V 21/02, H02G 3/10, F21V 21/03, H02G 3/20

(54) **Baldachin zum Anschluss elektrischer Verbraucher**

(30) Priorität: 17.04.2007 DE 202007005532 U
(71) Anmelder: Belux IP AG, 4132 Muttenz (CH)
(72) Erfinder: Zulauf, Patrick, 4058 Basel (CH)
(74) Vertreter: Ullrich, Gerhard

(57) **Zusammenfassung**

Der zum Anschluss einer elektrischen Lampe (**8**) bestimmte Baldachin hat zunächst eine Basis (**2**), die an einer Gebäudedecke (**5**) zu befestigen ist. Ferner gehört zum Baldachin eine Haube (**1**), welche in der Endstellung mit der Basis (**2**) verbunden ist und, gegen die Gebäudedecke (**5**) gerichtet, die Basis (**2**) überdeckt. Die Haube (**1**) weist einen umlaufenden elastischen Rand (**10**) auf, welcher in der Endstellung zumindest annähernd auf der Gebäudedecke (**5**) aufsetzt und ein zwischen dem Haubenrand (**10**) und der Gebäudedecke (**5**) in der Erstreckungsrichtung frei wählbares Herausführen von Stromkabeln (**6**) erlaubt. Die Haube (**1**) ist zumindest soweit flexibel beschaffen, dass sich diese zwischen einer selbsthaltenden Arbeitsstellung, in welcher die Basis (**2**) von aussen für die Montage zugänglich ist, und der selbsthaltenden Endstellung umstülpen lässt. Die Haube (**1**) besteht aus gummiartigem Material, z.B. Silikon, und kann im wesentlichen die Form einer kugeligen Halbschale, eines Kegelstumpfs oder eines Zylinders haben. Die Haube (**1**) weist Durchlässe (**11**) für das Herausführen von Stromkabein (**6**) und/oder Tragseilen (**7**) auf und hat ein Verbindungsorgan (**12**) zur direkten oder indirekten Befestigung an der Basis (**2**).

## Beschreibung

### Anwendungsgebiet der Erfindung

Die Erfindung betrifft einen Baldachin zum Anschluss elektrischer Verbraucher, insbesondere in Gestalt von Lampen. Der Baldachin hat eine Basis, die zur Befestigung an einem Hintergrund, insbesondere in Gestalt einer Gebäudedecke, vorgesehen ist. Ferner gehört eine Haube zum Baldachin, welche in einer Endstellung mit der Basis verbunden ist, und - gegen den Hintergrund gerichtet - die Basis überdeckt. Aus dem Baldachin können Stromkabel und/oder Tragseile herausgeführt werden.

### Stand der Technik

Die DE 40 01 414 A1 beschreibt einen Baldachin mit zylindrischem Gehäuse und Durchlassöffnungen in dessen Oberseite für den Deckenhaken und das einmündende Kabel. An der Gehäuseunterseite ist eine manschettenförmige Öse für den Austritt des Kabels zentrisch eingesetzt. Vom Deckenhaken zur Öse spannt sich ein elastisches Element und zieht den Baldachin bündig an die Decke. In einer alternativen Ausführungsform ist an der Öse eine flexible Lasche angebracht, in welche das elastische Element eingreift.

In der DE 199 06 686 A1 wird ein Anschlusssockel zur Deckenbefestigung für einen Lampenbaldachin bei entfernt liegendem Elektroanschluss offenbart. Im Sockel ist je eine Öffnung für Kabeleintritt bzw. -austritt, eine Zugentlastung sowie ein Loch mit einer Mulde für einen Deckenhaken vorhanden. Das Kabel tritt unten zentrisch am Baldachin aus.

Gegenstand der DE 102 61 305 A1 ist ein Baldachin für eine Pendeldeckenleuchte mit einem zylindrischen Gehäuse und einem in dessen oberen Ende deckelförmig eingesetzten Sockel. Der Sockel ist an einer exzentrischen Befestigungsstelle an der Zimmerdecke fixiert. Vom Sockel ragt in das Gehäuse ein Aufhänger, der die Kabelklemme mit der Zugentlastung für das Anschlusskabel trägt. Das Anschlusskabel tritt durch ein Tragstück zentrisch unten am Gehäuse aus und wird durch Reibschluss darin verschiebbar fixiert. Für den Kabeldurchtritt ist im Sockel ein exzentrisches, zum Aussenrand gerichtetes Loch vorhanden.

Die DE 20 2004 009 435 U1 hat einen stumpfkegligen Baldachin zum Gegenstand, der vertikal in zwei Halbschalen geteilt ist, welche mittels eines Scharniers oder beidseits angeordneter Rastelemente zusammengefügt sind. Im Zustand zusammengefügter Halbschalen wird das unten aus einem Loch austretende Kabel durch Verengung festgeklemmt.

Inhalt der WO 02/01110 A1 ist ein Baldachin, bestehend aus einem trichterförmigen Gehäuse, einem zur Befestigung an der Decke bestimmten Basisteil, in welchem eine halbkugelförmige Kabeldurchführung liegt, und einem unteren Abdeckring. Vom Basisteil erstrecken sich zwei Gewindestifte, welche durch Löcher im Gehäuse und im Abdeckring hindurchragen und mittels Hutmuttern gesichert werden, so dass das Gehäuse fixiert ist. Im oberen Rand des Gehäuses sind Langlöcher oder Karabineröffnungen vorhanden, durch welche eine zusätzliche Verschraubung mit dem Basisteil erfolgen kann.

Die WO 02/099932 A1 schliesslich offenbart einen an der Decke angebrachten, nach unten offenen Kanal, in dem sich ein elektrischer Anschluss befindet. Die von unten gegen den oberen Kanal angefügte Einheit besteht aus einer in den Kanal passenden Spange mit einem komplementären Elektroanschluss sowie einer zur Decke hin offenen Halbschale, welche federgelagert mit der Spange verbunden ist. Mittels die Federn durchragender Schrauben lässt sich die Halbschale gegen die Decke bis zum Anliegen justieren.

### Aufgabe der Erfindung

Angesichts der bisherigen Nachteile bekannter Konstruktionen liegt der Erfindung die Aufgabe zugrunde, einen Baldachin zum Anschluss einer Lampe vorzuschlagen, der eine vereinfachte Montage ermöglicht und im Prinzip spaltfrei auf den von einer Gebäudedecke oder einer -wand gebildeten Untergrund ansetzt. Aus dem Baldachin sollen sich Stromkabel und Tragseile quasi axial herausführen lassen - d.h. z.B. in Verbindung mit einer Pendelleuchte senkrecht in Bodenrichtung zur Lampe. Ausserdem sollen sich Stromkabel seitlich aus dem Baldachin - d.h. zwischen dem Untergrund und dem daran ansetzenden Baldachin - in beliebige Richtung herausführen lassen. Schliesslich muss der Baldachin zu effizienten Kosten in Serie gefertigt werden können.

### Übersicht über die Erfindung

Der zum Anschluss elektrischer Verbraucher, insbesondere in Gestalt von Lampen, konzipierte Baldachin hat zunächst eine Basis, die zur Befestigung an einem Hintergrund, insbesondere in Gestalt einer Gebäudedecke, vorgesehen ist. Ferner gehört zum Baldachin eine Haube, welche in einer Endstellung mit der Basis verbunden ist und gegen den Hintergrund gerichtet die Basis überdeckt. Die Haube weist einen umlaufenden elastischen Rand auf, welcher in der Endstellung zumindest annähernd auf den Hintergrund aufsetzt und ein zwischen dem Haubenrand und dem Hintergrund in der Erstreckungsrichtung frei wählbares Herausführen von Stromkabeln erlaubt.

Die nachfolgenden Merkmale beziehen sich auf spezielle Ausführungen der Erfindung: Die Haube ist zumindest soweit flexibel beschaffen, dass sich diese zwischen einer selbsthaltenden Arbeitsstellung, in welcher die Basis von aussen für die Montage zugänglich ist, und der selbsthaltenden Endstellung umstülpen lässt. Die Haube besteht aus gummiartigem Material, z.B. Silikon, und kann im wesentlichen die Form einer kugeligen Halbschale, eines Kegelstumpfs oder eines Zylinders haben. Die Haube weist Durchlässe für das Herausführen von Stromkabeln und/oder Tragseilen auf und hat ein Verbindungsorgan zur direkten oder indirekten Befestigung an der Basis. Ein Durchlass besteht aus sternförmig zueinander gerichteten Einschnitten, die im unbelegten Zustand quasi geschlossen sind und deren Ränder sich an ein durchragendes Stromkabel oder Tragseilen elastisch anschmiegen. Der Durchlass besitzt ein Umfeld erhöhter Elastizität, welche z.B. durch Verminderung der Wandstärke der Haube entsteht.

Die Haube ist mittels eines an der Basis befestigten Andockteils, in welches das Verbindungsorgan der Haube eingreift, indirekt mit der Basis verbunden. Alternativ ist das Verbindungsorgan der Haube direkt an der Basis fixiert. Schliesslich kann die Haube mit der Basis ein Teil bilden, wobei die Haube und die Basis im Zweikomponentenspritzverfahren aus Kunststoff hergestellt sind oder die Haube ist an die als Einlegeteil eingesetzte Basis angegossen. Vom Andockteil erstrecken sich an der Basis befestigte Stege, welche der Basis gegenüber liegend in einen Andockring einmünden. Der Ring kommt in einem Hinterschnitt des elastischen Verbindungsorgans der Haube zu liegen. Die Stege durchragen im Übergangsbereich zum Ring eine Nut des Verbindungsorgans. Ein Durchlass in der Haube ist zentrisch im Verbindungsorgan angeordnet.

Die Basis hat im wesentlichen die Gestalt einer Platte und weist Konturen zum Fixieren am Hintergrund auf. Zumindest mit einem Klemmblock für die elektrische Verdrahtung ist die Basis versehen. Die Basis lässt sich mit einem Zugentlastungselement für das herangeführte Stromkabel und einer Erdungsklemme bestücken. Ferner kann die Basis mit zumindest einem Seilhalter zur Fixierung eines Tragseils versehen werden.

Die Konturen zum Fixieren der Basis am Hintergrund sind als auskragende und erhöhte Zungensegmente mit darin vorhandenen Schraubenlöchern gestaltet. Zum Fixieren des zumindest einen Klemmblocks weist die Basis vierte Löcher, vorzugsweise Innengewindebohrungen, auf. Die Basis besitzt eine aus einem zentrischen Durchgang herausgebogene Lasche, an der erste Löcher zum Befestigen des Zugentlastungselements vorhanden sind, wobei der Durchgang für die Verlegung von Stromkabeln nutzbar ist. Schliesslich hat die Basis noch dritte Löcher zum Einsetzen des zumindest einen Seilhalters.

### Kurzbeschreibung der beigefügten Zeichnungen

Es zeigen:
- Figur 1A:: einen erfindungsgemässen Baldachin mit schalenförmiger Haube in Endstellung und an einem Stromkabel hängender Lampe, als Prinzip-darstellung;
- Figur 1B:: einen erfindungsgemässen Baldachin mit stumpfkegliger Haube in Endstellung und an drei Tragseilen hängender Lampe sowie zugeführtem Stromkabel, als Prinzipdarstellung;
- Figur 1C:: das vergrösserte Detail X1 aus Figur 1 B;
- Figur 1D:: den Baldachin aus Figur 1A in Endstellung mit zusätzlichen Tragseilen und seitlich austretenden Stromkabeln, als Prinzipdarstellung;
- Figur 2:: den kompletten Baldachin gemäss Figur 1A, in Explosivansicht;
- Figur 3A:: die Haube aus Figur 2, in Endstellung, in perspektivischer Aussenansicht;
- Figur 3B:: die Haube gemäss Figur 3A, in perspektivischer Innenansicht;
- Figur 3C:: die Haube aus Figur 1C, in Endstellung, in perspektivischer Innenansicht;
- Figur 3D:: die Haube gemäss Figur 3A, in Arbeitsstellung, in perspektivischer Innenansicht;

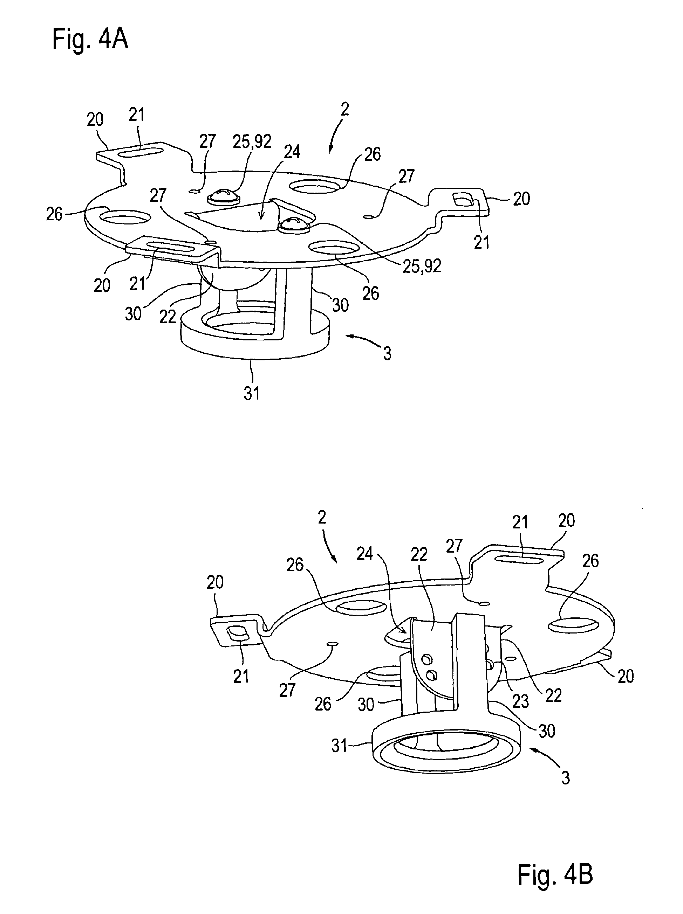

- Figur 4A:: die Basis aus Figur 2, in perspektivischer Draufsicht;
- Figur 4B:: die Basis gemäss Figur 4A, in perspektivischer Unteransicht;

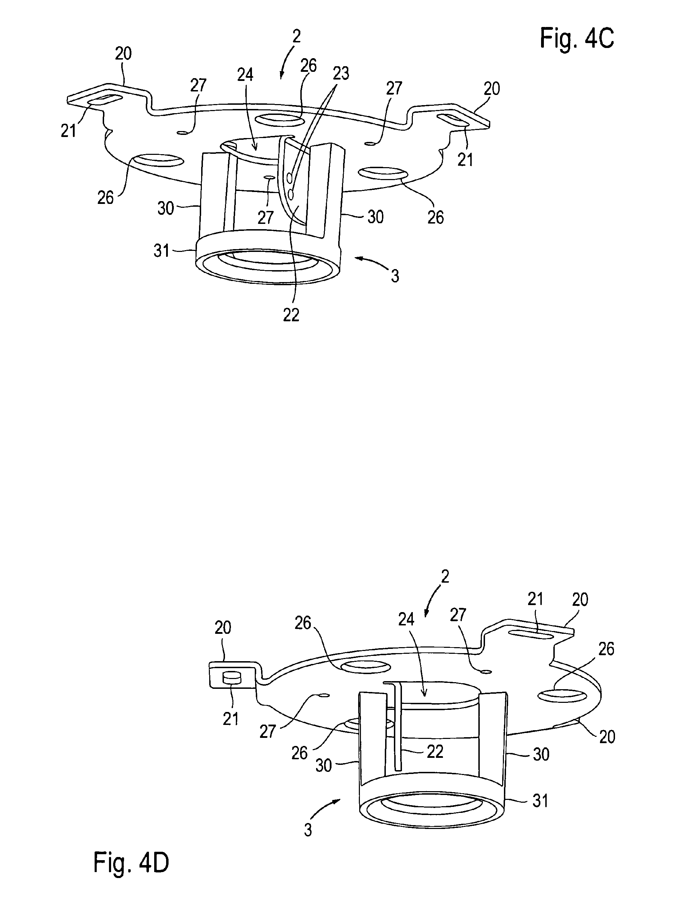

- Figur 4C:: die Darstellung gemäss Figur 4B, in gewechselter perspektivischer Unteransicht;
- Figur 4D:: die Darstellung gemäss Figur 4B, in erneut gewechselter perspektivischer Unteransicht;
- Figuren 5A: bis 9D: den prinzipiellen Montageablauf des Baldachins aus Figur 1A;

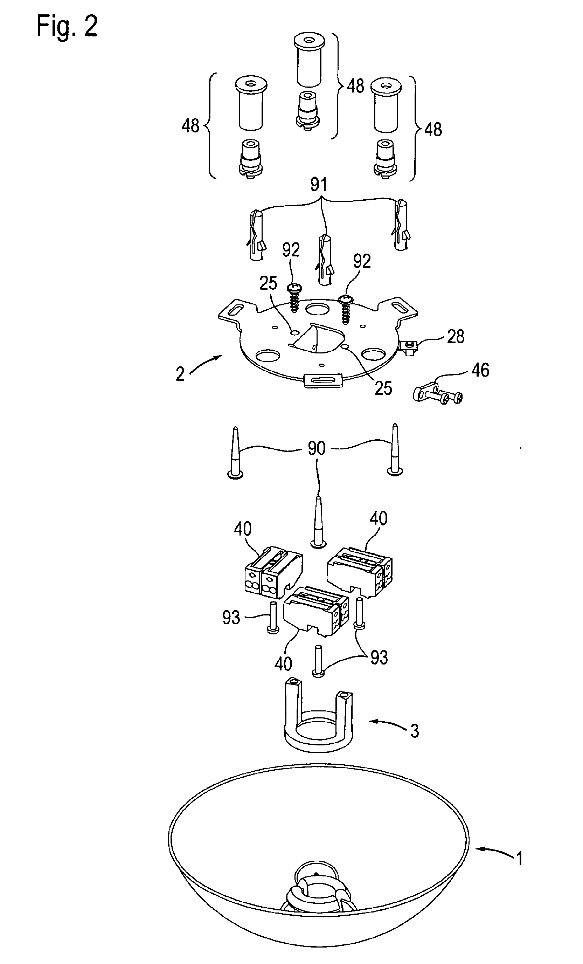

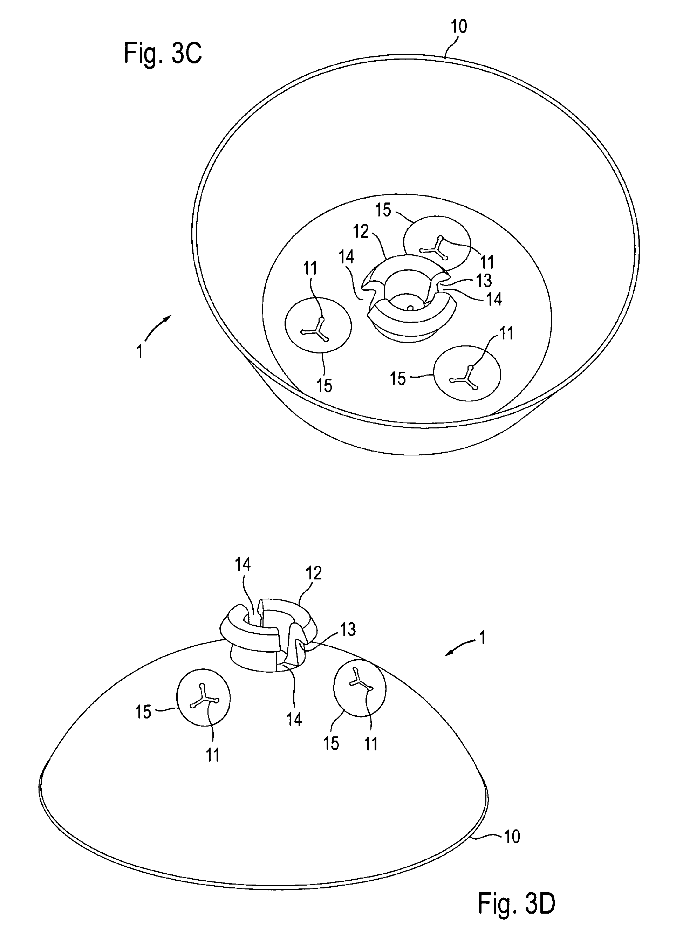

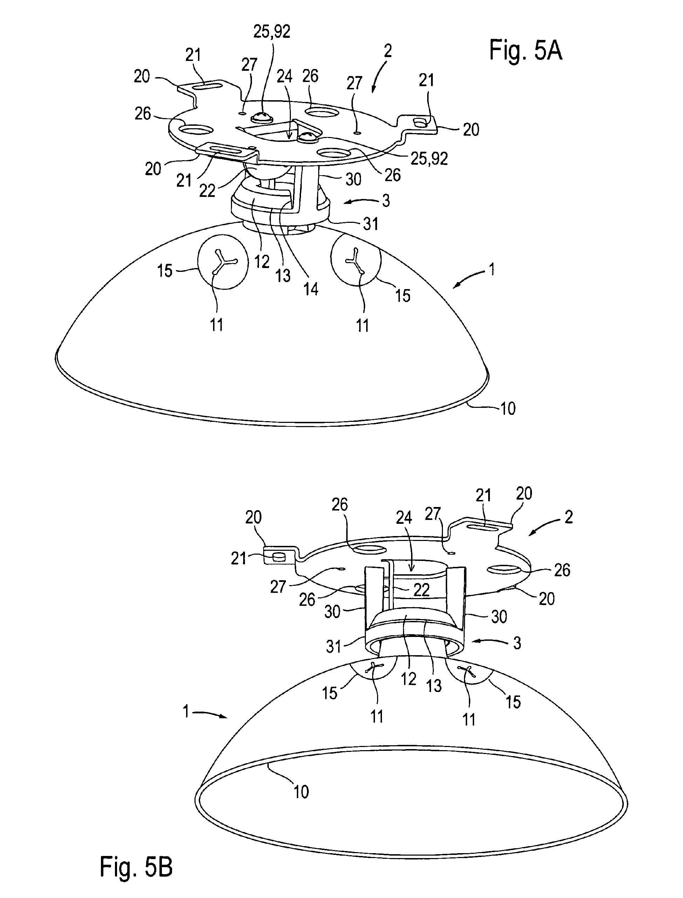

- Figur 5A:: die Haube gemäss Figur 3D in Arbeitsstellung mit durch das Andockteil verbundener Basis aus Figur 2, in perspektivischer Draufsicht;
- Figur 5B:: die Anordnung gemäss Figur 5A, in perspektivischer Unteransicht;

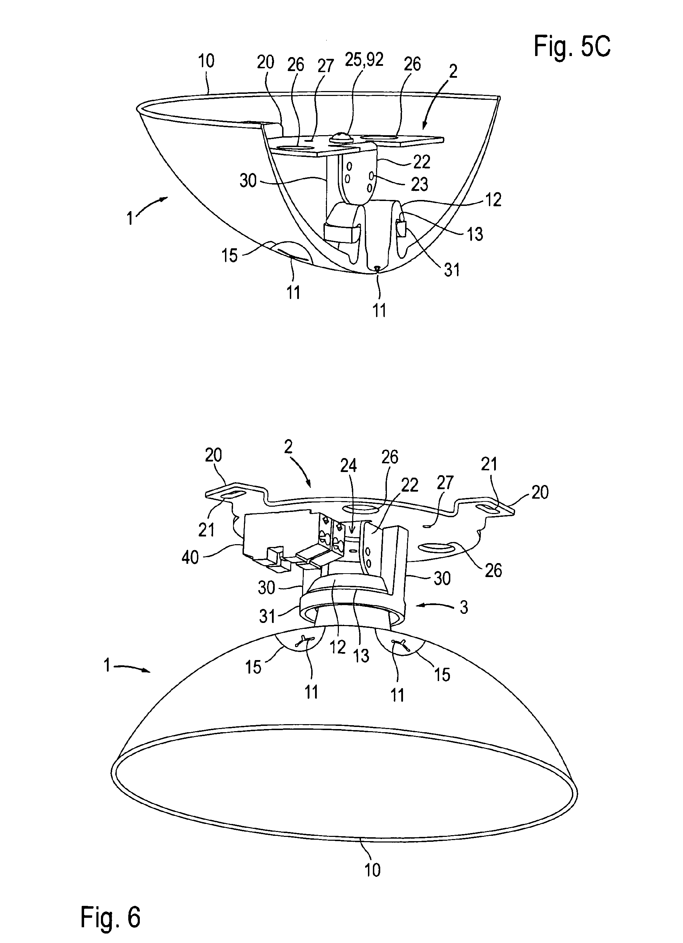

- Figur 5C:: die Anordnung gemäss Figur 5A, mit der Haube in Endstellung, im perspektivischem Vertikalschnitt;
- Figur 6:: die Anordnung gemäss Figur 5A mit zugesetztem Klemmblock und der Haube, weiterhin in Arbeitsstellung, in perspektivischer Unteransicht;

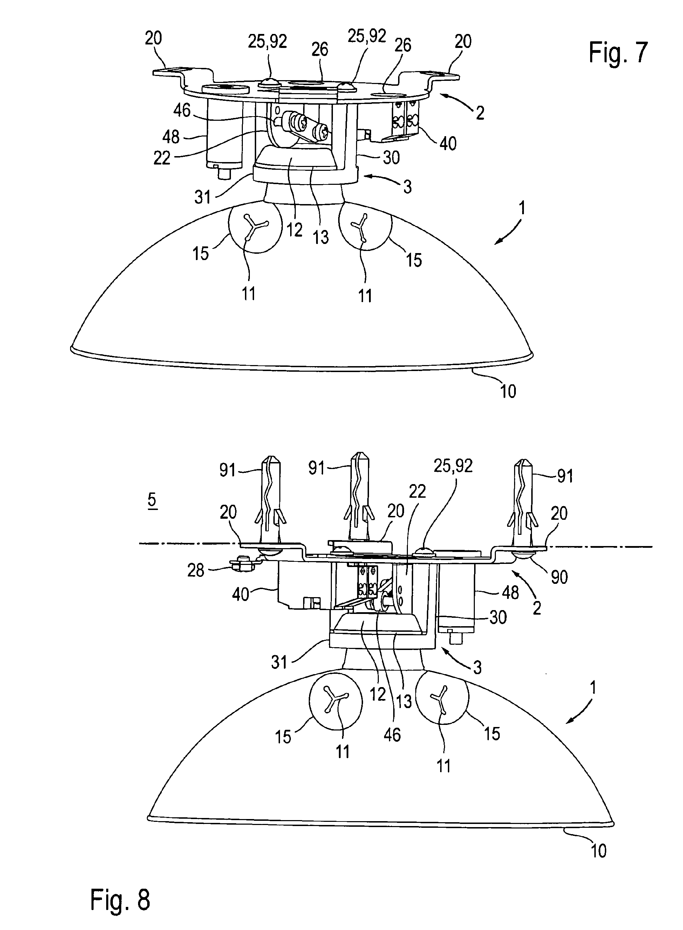

- Figur 7:: die Anordnung gemäss Figur 6 mit zugesetzter Zugentlastung und Seilhalter, weiterhin in Arbeitsstellung, in gewechselter perspektivischer Unteransicht;
- Figur 8:: die Anordnung gemäss Figur 7 mit zugesetzter Erdungsklemme, Dübeln und darin steckenden Schrauben, an der Decke befestigt, weiterhin in Arbeitsstellung, in Frontansicht;

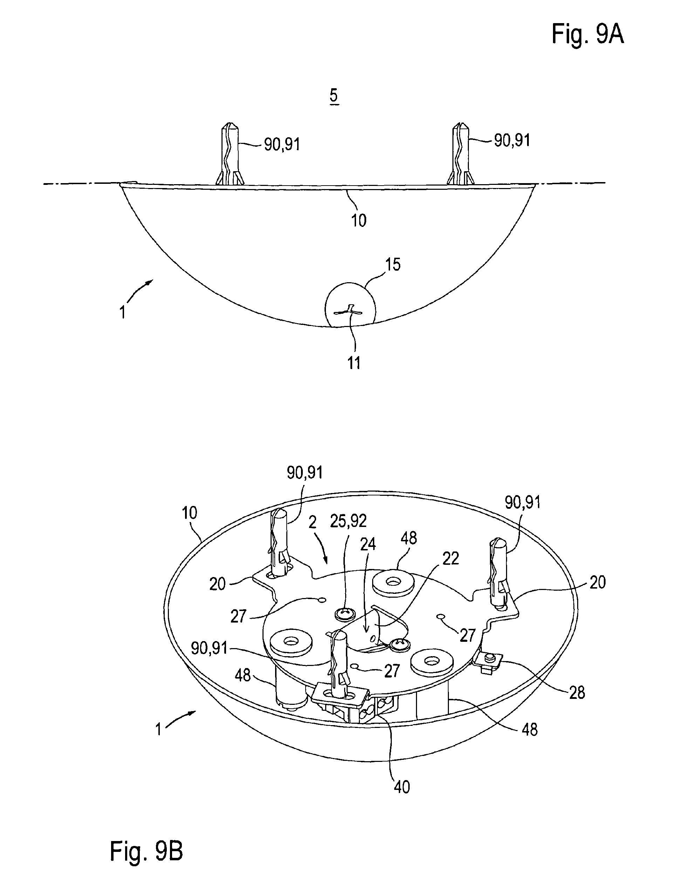

- Figur 9A:: die Anordnung gemäss Figur 8 mit der Haube in Endstellung, als frontale Prinzipdarstellung;
- Figur 9B:: die Anordnung gemäss Figur 9A mit drei Seilhaltern, in perspektivischer Innenansicht;

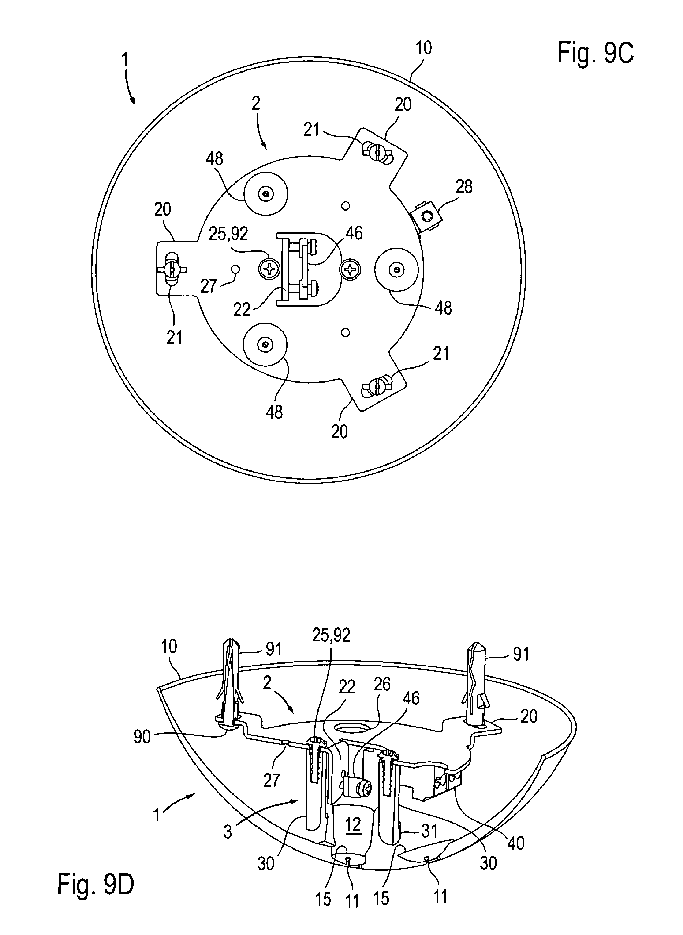

- Figur 9C:: die Anordnung gemäss Figur 9A, in Draufsicht; und
- Figur 9D:: die Anordnung gemäss Figur 9A, im perspektivischem Vertikalschnitt.

### Ausführungsbeispiel

Mit Bezug auf die beiliegenden Zeichnungen erfolgt nachstehend die detaillierte Beschreibung eines Ausführungsbeispiels des erfindungsgemässen Baldachins mit vorteilhaften Modifikationen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A bis 1D

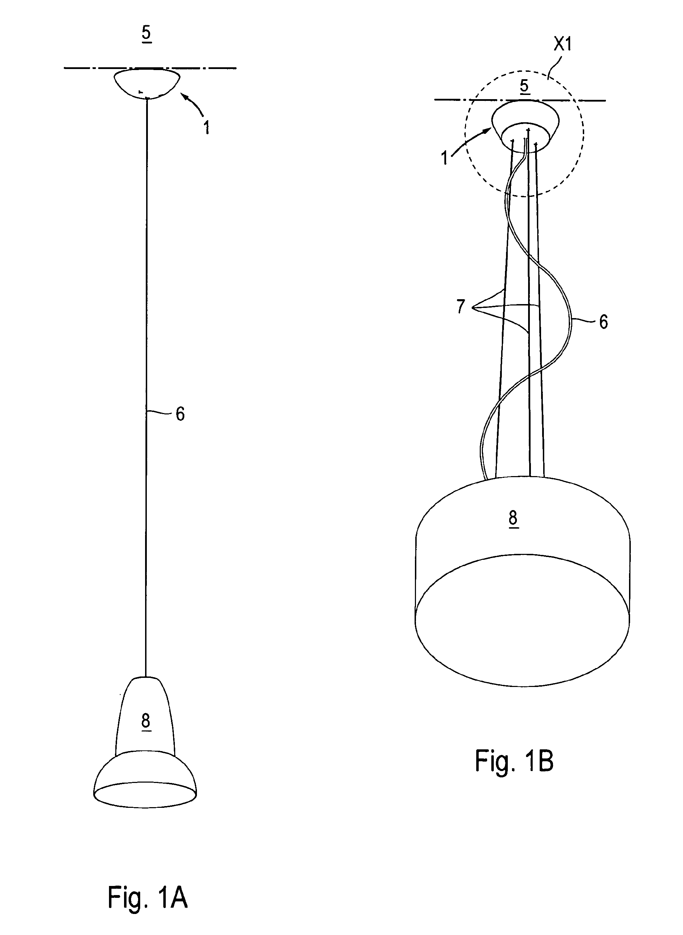

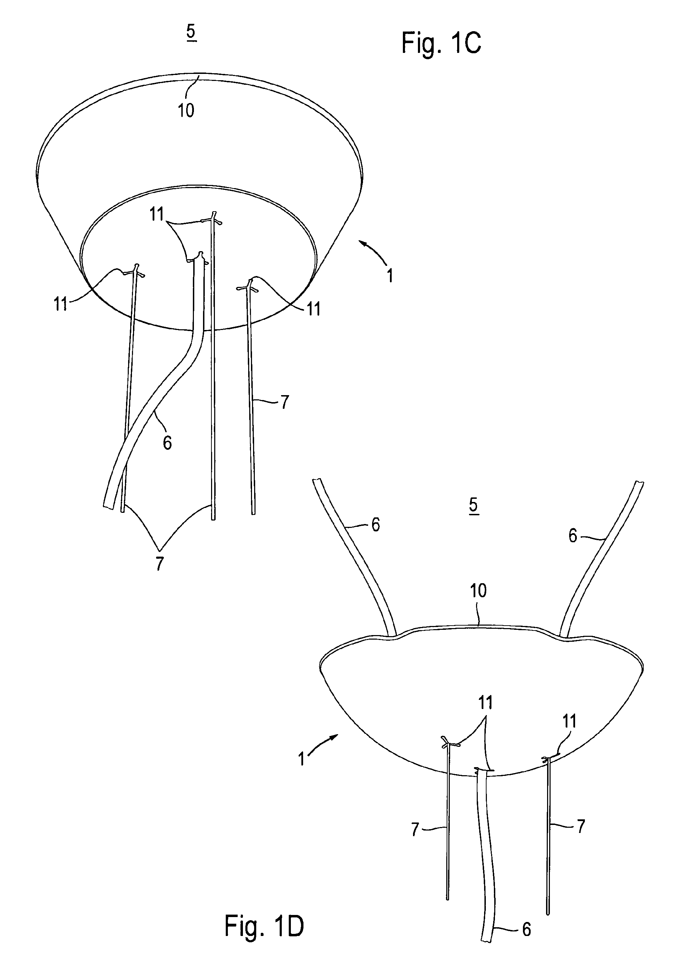

Ein Baldachin, von dem hier in der gegenwärtigen Endstellung nur die von aussen sichtbare Haube 1 erscheint, ist an einem Hintergrund 5, z.B. in Gestalt einer Gebäudedecke 5, befestigt. In einer ersten Variante hat die Haube 1 die Form einer runden Halbschale, aus welcher senkrecht nach unten ein Stromkabel 6 hängt, an dem ein elektrischer Verbraucher 8, z.B. in Gestalt einer Lampe 8, hängend angeschlossen ist (siehe Fig. 1A). Alternativ kann die Haube 1 die Gestalt eines Kegelstumpfs haben (siehe Fig. 1B). Schwerere Verbraucher 8 werden von einem oder mehreren Tragseilen **7** gehalten, die aus Durchlässen **11** der Haube **1** herausragen. Das zur Energieversorgung des Verbrauchers **8** dienende Stromkabel **6** ist separat aus der Haube **1** durch einen Durchlass **11** herausgeführt. Der am Hintergrund **5** anliegende Haubenrand **10** ist vorzugsweise von erhöhter Elastizität, um ein möglichst fugenfreies Anschmiegen am Hintergrund **5 -** auch bei Unregelmässigkeiten der Oberfläche - zu gewährleisten. Ein Durchlass **11** wird z.B. vorteilhaft aus drei kurzen, aufeinander zulaufenden Einschnitten gebildet und erlaubt den Durchlass **11** eines Stromkabels **6** oder eines Tragseils **7,** wobei ein nichtbelegter Durchlass 11 sich weitgehend verschliesst und somit keine optisch nachteilige grössere Öffnung belässt. Der elastische Haubenrand **10** ermöglicht das positionsfreie Herausführen von Stromkabeln **6** ganz nahe am Hintergrund **5,** wobei der Rand **10** das Stromkabel **6** gegen den Hintergrund **5** drückt und nur ein minimaler Durchtrittsspalt entsteht. Es entfällt das Anbringen von Ausbrüchen, wie bei bisherigen Baldachinen üblich und ausserdem lassen sich am Hintergrund **5** herausgeführte Stromkabel **6** völlig unproblematisch nach der Montage in der Verlaufsrichtung korrigieren. Vorzugsweise ist die Haube **1** einteilig und als elastisches Formteil beschaffen, das z.B. aus Silikon besteht.

### Figur 2

Im zerlegten Zustand besteht der Baldachin - neben der bereits erwähnten Haube **1 -** aus der plattenförmigen Basis **2,** einem Andockteil **3,** in der Regel mehreren an sich bekannten Klemmblöcken **40,** einem herkömmlichen Zugentlastungselement **46,** zumeist mehreren gewöhnlichen Seilhaltern **48** sowie ersten, zweiten und dritten Schrauben **90,92,93** und Dübeln **91** als Befestigungsmittel. Von der Basis **2** werden zunächst nur die hier frei sichtbaren zweiten Löcher **25** und die Erdungsklemme **28** genannt.

### Figuren 3A bis 3D

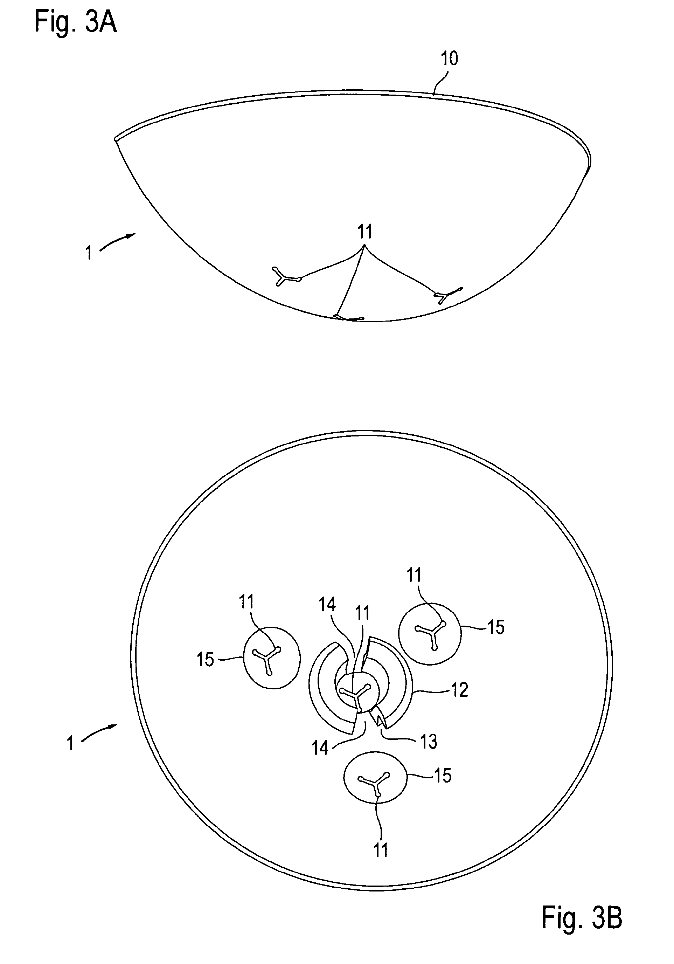

In der ersten Variante hat die Haube **1** die Form einer runden Halbschale (siehe Fig. 3A,3B,3D), während die zweite Variante stumpfkeglig ist (siehe Fig. 3C). Ansonsten stimmen zwischen beiden Varianten alle Merkmale überein. Die Haube **1** ist aus gummiartigem Material gefertigt; besonders eignet sich hierfür Silikon. An der Haube **1** ist ein umlaufender elastischer Rand **10** vorhanden und im zentrischen Bereich befinden sich mehrere Durchlässe **11** für das Herausführen von Stromkabeln **6** und/oder Tragseilen **7.** Ein Durchlass **11** wird von sternförmig zueinander gerichteten Einschnitten gebildet, die im unbelegten Zustand quasi geschlossen sind und deren Ränder sich an ein durchragendes Stromkabel **6** oder Tragseil **7** elastisch anschmiegen. Jeder Durchlass **11** ist von einem Umfeld **15** erhöhter Elastizität umgeben, welche durch Verminderung der Wandstärke der Haube 1 erreicht wird. Beispielsweise besitzt die Haube **1** einen in der Mitte positionierten Durchlass **11** und drei darum sternförmig, jeweils um 120° versetzt angeordnete Durchlässe **11.** Im Inneren der Haube **1** erhebt sich vom mittig angeordneten Umfeld **15** ein halsartiges, elastisches Verbindungsorgan **12,** das aussen einen umlaufenden Hinterschnitt **13** sowie eine das Verbindungsorgan **12** in zwei Hälften teilende Nut **14** besitzt.

Die Fig. 3A,3B,3C zeigen die Haube **1** in der selbsthaltenden Endstellung, bei welcher der elastische Rand **10** im montierten Zustand zumindest annähernd auf dem Hintergrund **5,** z.B. die Unterseite einer Raumdecke, aufsetzt und das Verbindungsorgan **12** in konkave Richtung zeigt. In Fig. 3D ist die Haube **1** in die selbsthaltende Arbeitsstellung gestülpt, so dass das Verbindungsorgan **12** jetzt in konvexe Richtung weist.

### Figuren 4A bis 4D

Die plattenförmige Basis **2** dient zur Befestigung an einem Hintergrund **5,** welcher typischerweise eine Gebäudedecke ist. Für die Basis **2** wird ein Kunststoff höherer Festigkeit oder Metall bevorzugt. Vom Aussenrand der Basis **2** erstrecken sich drei systematisch zueinander versetzte, auskragende und erhöhte Zungensegmente **20** mit darin vorhandenen Schraubenlöchern **21.** Zentrisch in der Basis **2** ist ein Durchgang **24** vorhanden, der durch Herausbiegen einer Lasche **22** entsteht, an welcher erste Löcher **23** zum Befestigen des Zugentlastungselements **46** vorhanden sind. Die Lasche **22** verläuft senkrecht zur übrigen Basis **2.** Der Durchgang **24** ist für die Verlegung von Stromkabeln **6** nutzbar. Sternförmig verteilte dritte Löcher **26** dienen zum Einsetzen von Seilhaltern **48** und an vierten Löchern **27** lassen sich Klemmblöcke **40** für die elektrische Verdrahtung befestigen. Vom Andockteil **3** erstrecken sich zwei Stege **30** senkrecht auf die Basis **2** und sind dort mittels der zweiten Schrauben **92,** die in die zweiten Löcher **25** eingreifen, befestigt. Der Basis **2** gegenüberliegend münden die Stege **30** in einen Ring **31** ein, der sich parallel zur Basis **2** erstreckt.

### Figuren 5A bis 8

Zur bequemeren Montage empfiehlt sich, die Basis **2** vor der Befestigung am Hintergrund **5** mit den für den jeweiligen Anwendungsfall benötigten Bauteilen zu bestücken und hierbei die Haube **1** in die Montagestellung zu stülpen. Das Verbindungsorgan **12** der Haube **1** übergreift den Ring **31** des Andockteils **3,** welcher im Hinterschnitt 13 partiell eingebettet ist, und die Stege **13** durchragen im Übergangsbereich zum Ring **31** die Nut **14** des Verbindungsorgans **12** (siehe Fig. 5A-5C). Lediglich zur besseren Sichtbarmachung des Zusammenwirkens zwischen dem Ring **31** und dem Hinterschnitt **13** am Verbindungsorgan **12** ist die Haube **1** quasi vorgezogen in Fig. 5C in der Endstellung gezeigt. In weitgehend wahlweiser Reihenfolge werden an der Basis **2** befestigt:
- ein oder mehrere Klemmblöcke **40** mittels der dritten Schrauben **93** und den vierten Löchern **27** (siehe Fig. 6); und
- ein Zugentlastungselement **46** an den ersten Löchern **23** in der Lasche **22** sowie die Seilhalter **48** in den dritten Löchern **26** (siehe Fig. 7).

In diesem Stadium würde man ein vorhandenes Stromkabel **6,** z.B. für eine Pendelleuchte, durch den zentrischen Durchlass **11** führen und eventuell benötigte Tragseile **7** durch die übrigen Durchlässe **11** verlegen. Ferner könnte jetzt auch der für den Schutz vorgesehene Draht an der Erdungsklemme **28** angeklemmt werden. Mittels ersten Schrauben **90,** welche durch die Schraubenlöcher **21** in den Zungensegmenten **21** geführt sind, lässt sich nun der Baldachin, mit der weiterhin in Montagestellung befindlichen Haube **1,** an dem Hintergrund **5** befestigen, an dem zuvor handelsübliche Dübel **91** eingesetzt wurden.

### Figuren 9A bis 9D

Zum Abschluss wird die Haube **1** aus der vorherigen Montagestellung in die Endstellung umgestülpt, so dass die Basis **2** mit den daran angeordneten Bauelementen vollständig nach aussen abgeschirmt ist und der Haubenrand **10** sich möglichst fugenfrei an den Hintergrund **5** anschmiegt. Unbelegte Durchlässe **11** sind weitgehend verschlossen und damit kaum sichtbar. Bei Bedarf lassen sich Stromkabel **6** auch zwischen dem Haubenrand **10** und dem Hintergrund **5** in frei wählbarer Erstreckungsrichtung herausführen und eventuell anschliessend in der Ausrichtung justieren. Der elastische Haubenrand **10** bewirkt hierbei, dass der Querschnitt des durchgeführten Kabels **6** eng umfasst wird.

## Patentansprüche

1. Baldachin zum Anschluss elektrischer Verbraucher **(8),** mit:
a) einer Basis **(2),** die zur Befestigung an einem Hintergrund **(5)** vorgesehen ist; und
b) einer Haube **(1),** welche in einer Endstellung mit der Basis **(2)** verbunden ist und gegen den Hintergrund **(5)** gerichtet die Basis **(2)** überdeckt, **dadurch gekennzeichnet, dass**
c) die Haube **(1)** einen umlaufenden elastischen Rand **(10)** aufweist, welcher in der Endstellung zumindest annähernd auf den Hintergrund **(5)** aufsetzt und ein zwischen dem Haubenrand **(10)** und dem Hintergrund **(5)** in der Erstreckungsrichtung frei wählbares Herausführen von Stromkabeln **(6)** erlaubt.

2. Baldachin nach Anspruch 1, **dadurch gekennzeichnet, dass** die Haube (1) zumindest soweit flexibel beschaffen ist, dass sich diese zwischen einer selbsthaltenden Arbeitsstellung, in welcher die Basis **(2)** von aussen für die Montage zugänglich ist, und der selbsthaltenden Endstellung umstülpen lässt.

3. Baldachin nach zumindest einem der Ansprüche 1 und 2, **dadurch gekennzeichnet, dass** die Haube **(1):**
a) aus gummiartigem Material, wie z.B. Silikon, besteht; und
b) im wesentlichen die Form einer kugeligen Halbschale, eines Kegelstumpfs oder eines Zylinders haben kann.

4. Baldachin nach zumindest einem der Ansprüche 1 bis 3, **dadurch gekennzeichnet, dass** die Haube **(1)** aufweist:
a) Durchlässe **(11)** für das Herausführen von Stromkabeln **(6)** und/oder Tragseilen (7); und
b) ein Verbindungsorgan **(12)** zur direkten oder indirekten Befestigung an der Basis **(2).**

5. Baldachin nach Anspruch 4, **dadurch gekennzeichnet, dass** ein Durchlass **(11):**
a) aus sternförmig zueinander gerichteten Einschnitten besteht, die im unbelegten Zustand quasi geschlossen sind und deren Ränder sich an ein durchragendes Stromkabel **(6)** oder an Tragseilen **(7)** elastisch anschmiegen; und
b) ein Umfeld **(15)** erhöhter Elastizität besitzt, welche z.B. durch Verminderung der Wandstärke der Haube **(1)** entsteht.

6. Baldachin nach zumindest einem der Ansprüche 1 bis 5, **dadurch gekennzeichnet, dass**
a) die Haube **(1)** mittels eines an der Basis **(2)** befestigten Andockteils **(3),** in welches das Verbindungsorgan **(12)** der Haube **(1)** eingreift, indirekt mit der Basis **(2)** verbunden ist; oder
b) das Verbindungsorgan **(12)** der Haube **(1)** direkt an der Basis **(2)** fixiert ist; oder
c) die Haube **(1)** mit der Basis **(2)** ein Teil bildet, wobei die Haube **(1)** und die Basis **(2)** im Zweikomponentenspritzverfahren aus Kunststoff hergestellt sind oder die Haube **(1)** an die als Einlegeteil eingesetzte Basis **(2)** angegossen ist.

7. Baldachin nach zumindest einem der Ansprüche 4 und 6, **dadurch gekennzeichnet, dass**
a) sich vom Andockteil **(3)** an der Basis **(2)** befestigte Stege **(30)** erstrecken;
b) der Basis **(2)** gegenüber liegend, die Stege **(30)** in einen Ring **(31)** einmünden;
c) der Ring **(31)** in einem Hinterschnitt **(13)** des elastischen Verbindungsorgans **(12)** der Haube **(1)** zu liegen kommt;
d) die Stege **(30)** im Übergangsbereich zum Ring **(31)** eine Nut **(14)** des Verbindungsorgans **(12)** durchragen; und
e) ein Durchlass **(11)** in der Haube **(1)** zentrisch im Verbindungsorgan **(12)** angeordnet ist.

8. Baldachin nach zumindest einem der Ansprüche 1 bis 7, **dadurch gekennzeichnet, dass** die Basis **(2):**
a) im wesentlichen die Gestalt einer Platte hat;
b) Konturen **(20,21)** zum Fixieren am Hintergrund **(5)** aufweist;
c) zumindest mit einem Klemmblock **(40)** für die elektrische Verdrahtung versehen ist;
d) sich mit einem Zugentlastungselement **(46)** für das herangeführte Stromkabel **(6)** und einer Erdungsklemme **(28)** bestücken lässt; und
e) mit zumindest einem Seilhalter **(48)** zur Fixierung eines Tragseils **(7)** versehen werden kann.

9. Baldachin nach Anspruch 8, **dadurch gekennzeichnet, dass**
a) die Konturen **(20,21)** zum Fixieren der Basis **(2)** am Hintergrund **(5)** als auskragende und erhöhte Zungensegmente **(20)** mit darin vorhandenen Schraubenlöchern **(21)** gestaltet sind;
b) zum Fixieren des zumindest einen Klemmblocks **(40)** die Basis **(2)** vierte Löcher **(27),** vorzugsweise Innengewindebohrungen, aufweist;
c) die Basis **(2)** eine aus einem zentrischen Durchgang **(24)** herausgebogene Lasche **(22)** besitzt, an der erste Löcher **(23)** zum Befestigen des Zugentlastungselements **(46)** vorhanden sind, wobei der Durchgang **(24)** für die Verlegung von Stromkabeln **(6)** nutzbar ist; und
d) die Basis **(2)** dritte Löcher **(26)** zum Einsetzen des zumindest einen Seilhalters **(48)** hat.

10. Baldachin nach zumindest einem der Ansprüche 1 bis 9, **dadurch gekennzeichnet, dass**
a) der elektrische Verbraucher **(8)** eine Lampe **(8)** ist; und
b) der Hintergrund **(5)** eine Gebäudedecke **(5)** darstellt.
